# EUROPÄISCHE PATENTSCHRIFT

(11) **EP 3 132 320 B1**
(45) Veröffentlichungstag und Bekanntmachung des Hinweises auf die Patenterteilung: **04.11.2020**
(21) Anmeldenummer: 15716995.4
(22) Anmeldetag: 02.04.2015
(51) Int. Cl.: G05B 19/418, G01S 5/22, B23Q 17/22, B25F 5/00

(54) **WERKZEUGGERÄT UND FERTIGUNGSASSISTENZVORRICHTUNG MIT EINER ULTRASCHALLORTUNG**
TOOL APPARATUS AND MANUFACTURING ASSISTANCE DEVICE WITH ULTRASONIC POSITION FINDING
OUTIL ET DISPOSITIF D'AIDE À LA PRODUCTION AVEC LOCALISATION PAR ULTRASONS

(30) Priorität: 17.04.2014 DE 102014005787
(43) Veröffentlichungstag der Anmeldung: 22.02.2017
(73) Patentinhaber: Sarissa GmbH, 88250 Weingarten (DE)
(72) Erfinder: JAUCH, Volker, 88255 Baienfurt (DE); RODE, Reinhard, 74081 Heilbronn (DE)
(74) Vertreter: Otten, Roth, Dobler & Partner mbB Patentanwälte
(86) Internationale Anmeldenummer: PCT/EP2015/057373
(87) Internationale Veröffentlichungsnummer: WO 2015/158558

(56) Entgegenhaltungen:
- DE-A1-102006 044 937
- DE-A1-102009 054 712
- DE-A1-102010 003 489

## Beschreibung

Die Erfindung betrifft ein Werkzeuggerät und eine Fertigungsassistenzvorrichtung mit einer Ultraschallortung nach den Oberbegriffen der Ansprüche 1 bzw. 10.

### Stand der Technik

Zur Verbesserung von Fertigungsprozessen sind Assistenzsysteme bzw. Überwachungssysteme bekannt geworden, mittels denen die Werkstücke bzw. Werkzeuge zum einen überwacht und zum anderen die Fertigung bzw. Montage auch begleitet werden kann. So ist in der EP 1 645 921 B1 eine Überwachung der Bewegung einer menschlichen Hand oder eines manuell geführten Bauteiles, insbesondere eines Werkzeugs, beschrieben. Hierin wird zur Verbesserung von Fertigungsprozessen die Verfolgung und Aufzeichnung von Bewegungsabläufen eines Werkzeugs, z.B. eines Schraubers, vorgeschlagen. Beispielsweise kann damit die Korrektheit einer vorgegebenen Reihenfolge von hintereinander durchzuführenden Fertigungsschritten, wie z.B. die Anbringung einer bestimmten Anzahl von Schrauben an bestimmten, vorgegebenen Positionen überwacht und dokumentiert werden.

Im Handel sind hierzu bereits Ortungsvorrichtungen, die eine Empfangseinheit mit drei Empfängern für Ultraschallsignale umfassen. Die Empfangseinheit ist über eine an Werkzeugen angebrachte Sendeeinheit mit drei Sendern mittels Laufzeitmessungen von Signalen der Sender in der Lage, die Sendeeinheit zu orten und hierbei deren Position bzw. die der entsprechenden Werkzeuge/Gegenstände zu ermitteln. Hierdurch sind eine Ortung der Werkzeuge sowie eine Bestimmung der Orientierung der Werkzeuge möglich. Somit kann durch Verfolgung der Werkzeugbewegungen die Abfolge von Prozessschritten, beispielsweise Verschraubungen, erfasst werden. Wird gleichzeitig ein Werkzeugparameter, beispielsweise der Betriebszustand und/oder das Drehmoment eines Schraubers erfasst, so kann nicht nur die korrekte Abfolge, sondern auch die korrekte Stärke der Verschraubung überprüft werden.

Beispielsweise über einen Monitor kann einer Bedienperson des Werkzeugs die als nächstes zu bearbeitende Verschraubung bzw. der nächste Montageschritt angezeigt und somit die Abfolge der Tätigkeiten erleichtert werden. Bei Nichteinhaltung der vorgegebenen Prozessschritte kann ein Warnsignal gegeben und/oder das Werkzeug außer Betrieb gesetzt werden. Auf diese Weise bietet das System der Bedienperson aufgrund der Prozessführung eine enorme Hilfestellung, wobei zugleich eine Qualitätssicherung gewährleistet ist.

Zur eindeutigen Bestimmung der Position der zu überwachenden Gegenstände bzw. Sendereinheit weist die Empfangseinheit ein Koordinatensystem auf, sodass die Position des zu ortenden Gegenstandes bzw. des Senders im Raum eindeutig beschrieben bzw. bestimmt werden kann. Dementsprechend ist im zu überwachenden Aktionsraum des Empfängers ein Koordinatensystem definiert, das als Bezugsgröße sowohl für die Sendereinheit als auch für die Empfangseinheit gilt.

Nachteilig ist jedoch, der vor allem auf Seiten des mobilen bzw. zu ortenden Gegenstandes bzw. Werkzeugs der konstruktive und steuerungstechnische Aufwand relativ groß und das Platzangebot sowie gerade bei mit Akkus betriebenen Werkzeugen auch die Energieversorgung beschränkt sind. Jedoch ist auch auf der stationären Seite der steuerungstechnische Aufwand bzgl. der Verarbeitung und Auswertung der Signale vergleichsweise groß, insbesondere wenn eine relativ große Genauigkeit der Ortung bzw. der Fertigung erreicht werden soll.

Ein Handwerkzeug mit Hilfsvorrichtung zur Bestimmung seiner räumlichen Lage ist aus DE 10 2010 003 489 A1 bekannt.

### Aufgabe und Vorteile der Erfindung

Aufgabe der Erfindung ist demgegenüber, ein Werkzeuggerät und eine Fertigungsassistenzvorrichtung mit einer Ultraschallortung zur Ultraschallortung vorzuschlagen, das/die weniger Aufwand erfordert und insbesondere eine präzisere Ortung und/oder Fertigung erreicht.

Diese Aufgabe wird, ausgehend von einem Werkzeuggerät und einer Fertigungsassistenzvorrichtung der einleitend genannten Art, jeweils durch die Merkmale der Ansprüche 1 bzw. 10 gelöst. Durch die in den Unteransprüchen genannten Maßnahmen sind vorteilhafte Ausführungen und Weiterbildungen der Erfindung möglich.

Bei der erfindungsgemäßen Vorrichtung weisen die Gerade der Sendeeinheit und die Bearbeitungslängsachse einen gemeinsamen Schnittpunkt auf. Bei einer vorteilhaften festen Fixierung bzw. Montage der Sendeeinheit am Werkzeuggerät ist die Lage bzw. Ausrichtung des gemeinsamen Schnittpunkts eindeutig festgelegt. Denn die Bearbeitungslängsachse ist eindeutig festgelegt durch das Gerät als solches und bei entsprechender eindeutiger Lage und Ausrichtung der Sendeeinheit bzw. der beiden Sender folglich auch die Lage und Ausrichtung der Geraden. So ist in vorteilhafter Weise der Abstand des gemeinsamen Schnittpunkts von der Sendeeinheit bzw. den Sendern fest vorgegeben bzw. bekannt.

Vorteilhafterweise ist der Schnittpunkt-Abstand, d.h. der Abstand des gemeinsamen Schnittpunkts zur Sendeeinheit bzw. zu einem der Sender, bekannt bzw. (exakt) fest vorgegeben. Gemäß der vorteilhaften Variante der Erfindung ist aufgrund der Kenntnis der Lage bzw. des Abstandes des gemeinsamen Schnittpunkts eine deutliche Reduktion bzgl. des Aufwands für die Ortung des Werkzeuggerätes und/oder des Arbeitspunktes des Bearbeitungswerkzeugs, d.h. des sogenannten "Tool Points", erreicht. Auch kann durch die o.g. Kenntnis der Lage des gemeinsamen Schnittpunkts eine besonders genaue Ortung des Werkzeuggerätes und/oder des Arbeitspunktes des Bearbeitungswerkzeugs, d.h. des sogenannten "Tool Points", realisiert werden.

Erfindungsgemäß ist der gemeinsame Schnittpunkt zugleich der Arbeitspunkt des Bearbeitungswerkzeugs, d.h. des sogenannten "Tool Points". Bei der Erfindung ist keinerlei Umrechnung bzw. Software-Berechnung notwendig, um die exakte Lage des für die Bearbeitung entscheidenden Punktes zu erhalten. Demzufolge ist dies besonders wenig aufwendig. Zugleich kann hiermit eine sehr genaue, z.B. eine Millimeter genaue oder sogar 1/10 oder 1/100 Millimeter genaue Ortung und Fertigungsassistenz verwirklicht werden. So wird die Qualität bzw. Zuverlässigkeit der Fertigungsassistenz weiter verbessert bzw. eine fehlerhafte Fertigung aufgrund einer ungenauen Ortung wirkungsvoll verhindert.

Die erfindungsgemäße Bearbeitungslängsachse ist im Wesentlichen eine Längsachse des Bearbeitungswerkzeugs, in die das Bearbeitungswerkzeug und/oder das Werkzeuggerät längs ausgerichtet ist. So kann diese Bearbeitungslängsachse beispielsweise bei einer Elektroden-Schweißzange die Ausrichtung der Schweißelektrode sein, bei einer Punktschweißzange mit zwei Zangenarmen kann diese die (zentrale) Mittellängsachse bzw. die ggf. vorhandene Symmetrieachse sein.

Bei einem Betriebsstoff- bzw. Klebstoff-, Schmierstoff- bzw. Fettspender oder bei einer Lack-/Farbpistole, einer Heißluft-, Druckluftpistole oder dergleichen kann die Bearbeitungslängsachse in vorteilhafter Weise als die zentrale Längsachse der entsprechenden Düse ausgebildet sein. Bei einem Stanzgerät, Nietwerkzeug oder Bolzensetzgerät wie ein Nagelgerät, Kramp- oder Klammerapparat, kann die Bearbeitungslängsachse als Verstellrichtung bzw. Vorschubrichtung des jeweiligen Elements bzw. des Bearbeitungswerkzeuges ausgebildet werden.

In einer besonderen Weiterbildung ist die Bearbeitungslängsachse als Symmetrie- und/oder Drehachse des Bearbeitungswerkzeugs ausgebildet. Zahlreiche und unterschiedlichste Werkzeuggeräte weisen Bearbeitungswerkzeuge auf, die sich um eine (elektrisch oder pneumatisch, motorisch antreibbare) Symmetrie- oder Drehachse drehen. Dies ist u.a. bei Schraubern, Bohrern, aber auch bei Werkzeuggeräten wie Drehmomentenschlüssel von Vorteil. Denn auch bei Letzteren oder ähnlichen Werkzeuggeräten ist eine zentrale Symmetrieachse des Bearbeitungswerkzeuges, z.B. des (auswechselbaren) Steckschlüssels, d.h. der sog. "Nüsse", und/oder (auswechselbaren) Schraubendreherklinge, d.h. sog. "Bit", vorhanden, die im Sinn der Erfindung als Bearbeitungslängsachse ausgebildet wird.

Vorzugsweise umfasst die Sendeeinheit die zwei, auf der Geraden angeordneten Ultraschall-Sender und zudem wenigstens einen dritten, in einem Abstand zur Geraden angeordneten Ultraschall-Sender. Hiermit kann erreicht werden, dass gerade auch bei nicht-drehsymmetrischen Werkzeuggeräten wie z.B. bei sog. Pistolenwerkzeugen, d.h. mit einem gegenüber der Bearbeitungslängsachse abgewinkelten, vielmals stumpfwinklig abgewinkelten Handgriff, in vorteilhafter Weise eine Ermittlung bzw. Berechnung der Orientierung bzw. Ausrichtung des Werkzeuggerätes realisiert werden kann.

So ist durch die wenigstens drei Sender der Sendeeinheit eine vorteilhafte Sende-Ebene exakt definiert und ermittelbar bzw. mittels der Ortungseinheit erfassbar. Damit ist die Orientierung des gesamten Werkzeugs und somit u.a. in vorteilhafter Weise die exakte Lage und Ausrichtung der Bearbeitungslängsachse erfassbar und auswertbar, insbesondere in Bezug auf den Arbeitspunkt des Bearbeitungswerkzeugs, d.h. den sog. "Tool Point". Demzufolge kann das manuell geführte Werkzeuggerät in vorteilhafter Weise geortet und dessen Lage sowie Orientierung bzw. Ausrichtung ermittelt bzw. berechnet werden.

Grundsätzlich kann der gemeinsame Schnittpunkt auch verschieden zum Arbeitspunkt des Bearbeitungswerkzeugs, d.h. den sog. "Tool Point" sein. Das heißt, dass der Arbeitspunkt des Bearbeitungswerkzeugs, d.h. den sog. "Tool Point", und der gemeinsame Schnittpunkt zwar auf der Bearbeitungslängsachse angeordnet sind, jedoch an unterschiedlichen Stellen/Positionen bzw. voneinander beabstandet sind. Dieser Abstand kann je nach (auswechselbarem) Bearbeitungswerkzeug unterschiedlich groß sein. Allerdings sind gewöhnlich standardisierte Bearbeitungswerkzeuge bzw. Bearbeitungswerkzeuge mit bekannten Dimensionen vorhanden, so dass die unterschiedlichen Abstände des Arbeitspunkts des Bearbeitungswerkzeugs, d.h. des sog. "Tool Points", gegenüber dem gemeinsamen Schnittpunkt berücksichtigt werden kann, insb. von der elektronischen Kontroll-/Steuereinheit.

Vorteilhafterweise sind der dritte Ultraschall-Sender und ein vierter Ultraschall-Sender der Sendeeinheit auf einer zweiten Geraden angeordnet, wobei die zweite Gerade der Sendeeinheit und die Bearbeitungslängsachse einen zweiten, gemeinsamen Schnittpunkt aufweisen. Hiermit kann die Präzision der Ortung weiter verbessert werden.

Alternativ oder in Kombination zur Erfindung gemäß Anspruch 1 können die beiden Geraden der beiden Ultraschall-Sender-Paare der Sendeeinheit sich in einem gemeinsamen Geraden-Schnittpunkt schneiden, insb. unabhängig bzw. beabstandet von der Bearbeitungsgeraden des Bearbeitungswerkzeugs. Das heißt, dass bei einem Werkzeuggerät gemäß dem Oberbegriff des Anspruchs 1 die erfindungsgemäße Aufgabe auch mit einer Ausführungsform gelöst wird, bei der sich die wenigsten zwei Geraden von zwei Senderpaaren schneiden. Auch hiermit können die Ortung bzw. Überwachung des Werkzeuggerätes verbessert, insbesondere präziser realisiert werden. Dieser fest definierte Geraden-Schnittpunkt kann mit einem entsprechend bekannten "Offset" bzw. Abstand zum Arbeitspunkt bzw. "Tool Point" eine hochpräzise Fertigungsassistenz bzw. Ortung ermöglichen.

Vorzugsweise sind die wenigstens zwei Schnittpunkte identisch. So sind die beiden Schnittpunkte der beiden Sender-Paare der Sendereinheit bevorzugt auf der Bearbeitungsgerade angeordnet und zudem an der gleichen bzw. identischen Stelle/Position.

In einer bevorzugten Variante der Erfindung ist ein Sender-Abstand zwischen zwei Ultraschall-Sendern der Sendeeinheit größer als ein Abstand zwischen dem Schnittpunkt und dem nächstliegenden bzw. einem der Ultraschall-Sender. Hiermit wird erreicht, dass die vorteilhaften Längen- bzw. Abstandsverhältnisse eine besonders präzise bzw. genaue Ortung ermöglichen. So sind kleinere Toleranzen bzgl. der konkreten Lage der montierten Sender weniger oder nahezu nicht relevant.

Vorteilhafterweise ist ein Winkel zwischen der Bearbeitungslängsachse und den Geraden bzw. der Geraden eines Senderpaares bzw. der beiden Ultraschall-Sender als spitzer Winkel, insbesondere zwischen 1° und 30°, vorzugsweise zwischen ca. 15° und 20°, ausgebildet. Hiermit ist eine vorteilhafte Anordnung der Sendeeinheit und/oder Kreuzung der Geraden bzw. Achsen realisierbar.

Eine Bedienperson kann in vorteilhafter Weise über eine längere Zeit mit dem entsprechenden Werkzeuggerät arbeiten, wenn dies nicht zu schwer und somit der elektrische Anschluss oder der Akku bzw. die Batterie nicht zu schwer ist.

Demzufolge ist ein Fertigungsassistenzvorrichtungssystem in vorteilhafter Weise für mobile und/oder manuell geführte Anwendungen bzw. mobile und/oder manuell geführte Werkzeuggeräte bzw. Sender/Gegenstände verwendbar. Hiermit wird eine praktikable und effiziente bzw. wirtschaftlich günstige Ortung realisiert.

Vorteilhafterweise sind das/die Koordinatensysteme als dreidimensionale und/oder geradlinige und/oder orthogonale Koordinatensysteme ausgebildet. Hiermit kann in vorteilhafterweise eine Ortung von Sendern bzw. einen Sender aufweisende Gegenstände realisiert werden, die sich dreidimensional im Raum bewegen bzw. anordenbar sind, was gerade bei mobilen und/oder manuell geführten Anwendungen von Vorteil ist.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematische Darstellung eines erfindungsgemäßen Akku-Schraubers in Seitenansicht,
- Figur 2: eine schematische Darstellung des erfindungsgemäßen Akku-Schraubers in Draufsicht und

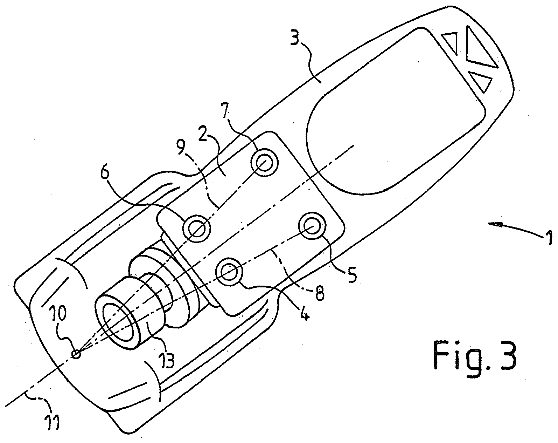

- Figur 3: eine schematische Darstellung des erfindungsgemäßen Akku-Schraubers in perspektivischer Ansicht.

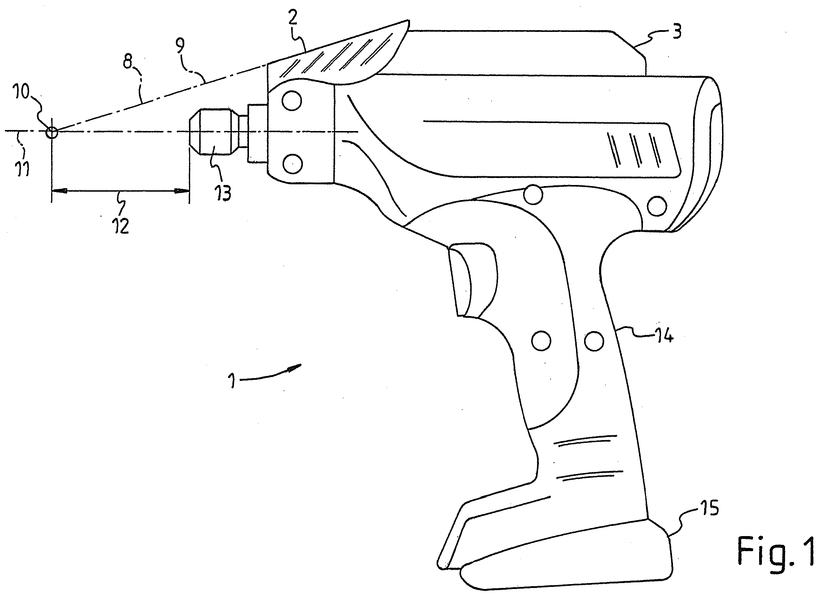

In Figur 1 ist ein Werkzeuggerät gemäß der Erfindung als Akkuschrauber 1 abgebildet. Dieser ist mit einer Sendeeinheit 2 für eine Fertigungsassistenzvorrichtung ausgestattet. Die Sendereinheit 2 ist fest im/am Gehäuse 3 des Akkuschraubers 1 montiert/integriert. Der Akkuschrauber 1 weist u.a. einen Handgriff 14 sowie einen Akku 15 auf.

Die Sendeeinheit 2 weist in diesem Beispiel zweimal zwei Sender 4 und 5 sowie 6 und 7 auf. Die zwei Sender 4, 5 und 6, 7 bilden ein Senderpaar, das jeweils auf einer Geraden 8, 9 angeordnet ist. Diese beiden Geraden 8, 9 kreuzen bzw. schneiden sich in einem Schnittpunkt 10. Der Schnittpunkt 10 liegt zudem auf einer Achse 11. Die Achse 11 entspricht der Drehachse des Akkuschraubers 1.

Im abgebildeten Beispiel gemäß Figur 1 wird deutlich, dass die vier Sender 4, 5, 6, 7 alle auf einer Ebene angeordnet sind.

Da die Sendereinheit 2 fest im Gehäuse 2 integriert ist bzw. unlösbar am Akkuschrauber 1 angeordnet ist, ist ein Abstand 12 des Schnittpunktes 10 von einer Werkzeugaufnahme 13 bekannt und festgelegt. Auch sind die nicht näher dargestellten, auswechselbaren Werkzeuge wie sog. "Bits" und/oder "Nüsse" und/oder Bohrer bzw. deren Dimensionen, d.h. Länge etc., bekannt. So kann zum Beispiel fest abgespeicherte Angaben zu den jeweiligen Einsätze/Werkzeuge dafür verwendet werden, dass der jeweilige Arbeitspunkt bzw. sog. "Tool Point" in Bezug zum Schnittpunkt 10 berechnet bzw. bekannt ist. Hierdurch kann in vorteilhafter Weise ohne großen Aufwand eine besonders präzise Fertigungsassistenz realisiert werden.

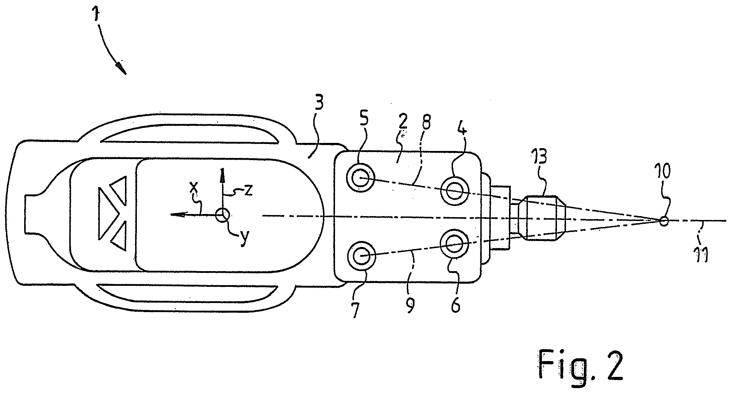

In Figur 2 ist zudem ein Koordinatensystem bzw. drei orthogonale Koordinatenachsen X, Y, Z schematisch dargestellt.

### Bezugszeichenliste

- 1: Akkuschrauber
- 2: Sendeeinheit
- 3: Gehäuse
- 4: Sender
- 5: Sender
- 6: Sender
- 7: Sender
- 8: Gerade
- 9: Gerade
- 10: Schnittpunkt
- 11: Achse
- 12: Abstand
- 13: Aufnahme
- 14: Handgriff
- 15: Akku
- X: Koordinatenachse
- Y: Koordinatenachse
- Z: Koordinatenachse

## Patentansprüche

1. Werkzeuggerät (1) mit einem einen Arbeitspunkt aufweisenden Bearbeitungswerkzeug zum Bearbeiten eines Werkstücks und mit einer Ultraschall-Ortungseinheit zur Ultraschall-Ortung für eine Fertigungsassistenzvorrichtung durch Bestimmung wenigstens eines Abstandes zwischen einem Ultraschall-Sender (4, 5, 6, 7) und einem Ultraschall-Empfänger mittels Laufzeitmessung eines Ultraschall-Messsignals, wobei das Werkzeuggerät (1) eine Sendeeinheit (2) aufweist, die wenigstens zwei, auf einer Geraden (8, 9) angeordnete Ultraschall-Sender umfasst, wobei das Bearbeitungswerkzeug eine Bearbeitungslängsachse (11) aufweist, wobei die Gerade (8, 9) der Sendeeinheit (2) und die Bearbeitungslängsachse (11) einen gemeinsamen Schnittpunkt (10) aufweisen, **dadurch gekennzeichnet, dass** dieser Schnittpunkt (10) der Arbeitspunkt des Bearbeitungswerkzeugs ist.

2. Werkzeuggerät nach Anspruch 1, **dadurch gekennzeichnet, dass** die Bearbeitungslängsachse als Drehachse des Bearbeitungswerkzeugs ausgebildet ist.

3. Werkzeuggerät nach einem der vorgenannten Ansprüche, **dadurch gekennzeichnet, dass** die Sendeeinheit die zwei, auf der Geraden angeordneten Ultraschall-Sender und zudem wenigstens einen dritten, in einem Abstand zur Geraden angeordneten Ultraschall-Sender umfasst.

4. Werkzeuggerät nach einem der vorgenannten Ansprüche, **dadurch gekennzeichnet, dass** der dritte Ultraschall-Sender und ein vierter Ultraschall-Sender der Sendeeinheit auf einer zweiten Geraden angeordnet sind, wobei die zweite Gerade der Sendeeinheit und die Bearbeitungslängsachse einen zweiten, gemeinsamen Schnittpunkt aufweisen.

5. Werkzeuggerät nach einem der vorgenannten Ansprüche, **dadurch gekennzeichnet, dass** die wenigstens zwei Schnittpunkte identisch sind.

6. Werkzeuggerät nach einem der vorgenannten Ansprüche, **dadurch gekennzeichnet, dass** das Werkzeuggerät als Bohrer und/oder Schrauber und/oder Drehmomentschlüssel ausgebildet ist.

7. Werkzeuggerät nach einem der vorgenannten Ansprüche, **dadurch gekennzeichnet, dass** das Werkzeuggerät als Klebstoffspender und/oder Schmiermittelspender und/oder Farbsprühgerät ausgebildet ist.

8. Werkzeuggerät nach einem der vorgenannten Ansprüche, **dadurch gekennzeichnet, dass** das Werkzeuggerät als Schweißgerät und/oder Schweißzange und/oder Punktschweißzange ausgebildet ist.

9. Werkzeuggerät nach einem der vorgenannten Ansprüche, **dadurch gekennzeichnet, dass** das Werkzeuggerät als Stanzwerkzeug und/oder Nietwerkzeug und/oder Bolzensetzgerät ausgebildet ist.

10. Fertigungsassistenzvorrichtung mit wenigstens einem ein Bearbeitungswerkzeug aufweisenden Werkzeuggerät zum Bearbeiten eines Werkstücks und mit einer Ultraschall-Ortungseinheit zur Ultraschall-Ortung durch Bestimmung wenigstens eines Abstandes zwischen einem Ultraschall-Sender und einem Ultraschall-Empfänger mittels Laufzeitmessung eines Ultraschall-Messsignals, **dadurch gekennzeichnet, dass** das Werkzeuggerät nach einem der vorgenannten Ansprüche ausgebildet ist.

## Claims

1. A tool apparatus (1) having a processing tool having a working point for processing a workpiece and having an ultrasonic position finding unit for ultrasonic position finding for a manufacturing assistance device by determining at least one distance between an ultrasonic transmitter (4, 5, 6, 7) and an ultrasonic receiver by means of time-of-flight measurement of an ultrasonic measurement signal, wherein the tool apparatus (1) has a transmitting unit (2) which comprises at least two ultrasonic transmitters arranged on a straight line (8, 9), wherein the processing tool has a processing longitudinal axis (11), wherein the straight line (8, 9) of the transmitting unit (2) and the processing longitudinal axis (11) have a common intersection point (10), **characterised in that** this intersection point (10) is the working point of the processing tool.

2. The tool apparatus according to claim 1, **characterised in that** the processing longitudinal axis is formed as a rotational axis of the processing tool.

3. The tool apparatus according to any one of the preceding claims, **characterised in that** the transmitting unit comprises the two ultrasonic transmitters arranged on the straight line and also at least one third ultrasonic transmitter arranged at a distance from the straight line.

4. The tool apparatus according to any one of the preceding claims, **characterised in that** the third ultrasonic transmitter and a fourth ultrasonic transmitter of the transmitting unit are arranged on a second straight line, wherein the second straight line of the transmitting unit and the processing longitudinal axis has a second, common intersection point.

5. The tool apparatus according to any one of the preceding claims, **characterised in that** the at least two intersection points are identical.

6. The tool apparatus according to any one of the preceding claims, **characterised in that** the tool apparatus is designed as a drill and/or screwdriver and/or torque wrench.

7. The tool apparatus according to any one of the preceding claims, **characterised in that** the tool apparatus is designed as an adhesive dispenser and/or lubricant dispenser and/or paint spray device.

8. The tool apparatus according to any one of the preceding claims, **characterised in that** the tool apparatus is designed as a welding device and/or welding tongs and/or spot welding tongs.

9. The tool apparatus according to any one of the preceding claims, **characterised in that** the tool apparatus is designed as a punching tool and/or riveting tool and/or bolt setting device.

10. A manufacturing assistance device having at least one tool apparatus having a processing tool for processing a workpiece and having an ultrasonic position finding unit for ultrasonic position finding by determining at least one distance between an ultrasonic transmitter and an ultrasonic receiver by means of time-of-flight measurement of an ultrasonic measurement signal, **characterised in that** the tool apparatus is designed according to any one of the preceding claims.

## Revendications

1. Appareil outil (1) comprenant un outil d'usinage comportant un point de travail destiné à l'usinage d'une pièce et comprenant une unité de localisation par ultrasons destinée à la localisation par ultrasons pour un dispositif d'aide à la production par détermination d'au moins une distance entre un émetteur d'ultrasons (4, 5, 6, 7) et un récepteur d'ultrasons au moyen de la mesure du temps de propagation d'un signal de mesure ultrasonique, dans lequel l'appareil outil (1) comporte une unité émettrice (2), laquelle comprend au moins deux émetteurs d'ultrasons disposés sur une ligne droite (8, 9), dans lequel l'outil d'usinage comporte un axe d'usinage longitudinal (11), dans lequel la ligne droite (8, 9) de l'unité émettrice (2) et l'axe d'usinage longitudinal (11) présentent un point d'intersection (10) commun, **caractérisé en ce que** ledit point d'intersection (10) est le point de travail de l'outil d'usinage.

2. Appareil outil selon la revendication 1, **caractérisé en ce que** l'axe d'usinage longitudinal est conçu comme axe de rotation de l'outil d'usinage.

3. Appareil outil selon l'une quelconque des revendications précédentes, **caractérisé en ce que** l'unité émettrice comprend les deux émetteurs d'ultrasons disposés sur la ligne droite et également au moins un troisième émetteur d'ultrasons disposé à distance de la ligne droite.

4. Appareil outil selon l'une quelconque des revendications précédentes, **caractérisé en ce que** le troisième émetteur d'ultrasons et un quatrième émetteur d'ultrasons de l'unité émettrice sont disposés sur une seconde ligne droite, la seconde ligne droite de l'unité émettrice et l'axe d'usinage longitudinal présentant un second point commun d'intersection.

5. Appareil outil selon l'une quelconque des revendications précédentes, **caractérisé en ce que** les au moins deux points d'intersection sont identiques.

6. Appareil outil selon l'une quelconque des revendications précédentes, **caractérisé en ce que** l'appareil outil est conçu sous forme d'une perceuse et/ou d'un tournevis et/ou d'une clé dynamométrique.

7. Appareil outil selon l'une quelconque des revendications précédentes, **caractérisé en ce que** l'appareil outil est conçu sous forme d'un distributeur de colle et/ou d'un distributeur de lubrifiant et/ou d'un appareil de pulvérisation de peinture.

8. Appareil outil selon l'une quelconque des revendications précédentes, **caractérisé en ce que** l'appareil outil est conçu sous forme d'un appareil de soudage et/ou d'une pince de soudage et/ou d'une pince de soudage par points.

9. Appareil outil selon l'une quelconque des revendications précédentes, **caractérisé en ce que** l'appareil outil est conçu sous forme d'un outil de poinçonnage et/ou d'un outil de rivetage et/ou d'un appareil de pose de boulons.

10. Dispositif d'aide à la production comprenant au moins un appareil outil comportant un outil d'usinage destiné à l'usinage d'une pièce et comprenant une unité de localisation par ultrasons destinée à la localisation par ultrasons par détermination d'au moins une distance entre un émetteur d'ultrasons et un récepteur d'ultrasons au moyen de la mesure du temps de propagation d'un signal de mesure ultrasonique, **caractérisé en ce que** l'appareil outil est conçu selon l'une quelconque des revendications précédentes.
